# EUROPEAN PATENT APPLICATION

(11) **EP 1 388 810 A2**
(43) Date of publication of application: **11.02.2004**
(21) Application number: 03014091.7
(22) Date of filing: 23.06.2003
(51) Int. Cl.: G06K 19/07, G06K 19/073, G06K 7/10

(54) **Radio frequency identification device and reader therefor**

(30) Priority: 09.08.2002 JP 2002232868
(71) Applicant: Hitachi, Ltd., Chiyoda-ku, Tokyo 101-8010 (JP)
(72) Inventor: Usami, Mitsuo, Hitachi, Ltd., Chiyoda-ku, Tokyo 100-8220 (JP)
(74) Representative: Strehl Schübel-Hopf & Partner

(57) **Abstract**

In order to manufacture a semiconductor device economically and effectively with good manufacturing yield, a power on reset circuit, which sometimes occupies one third of the entire chip area of the semiconductor device for radio frequency identification, is removed to achieve the downsizing of the semiconductor device. A semiconductor device for radio frequency identification comprises one or more flip-flop circuits, wherein an initialization element (16), functioning to determine that a certain output terminal of the flip-flop circuit is logically fixed to H or L when a power supply voltage is increased, is provided in the flip-flop circuit.

## Description

### BACKGROUND OF THE INVENTION

The present invention relates to a semiconductor device for radio frequency identification (RFID) and to a reader for reading information stored in the semiconductor device, and, more particularly, to a technique effectively applied to: a flip-flop circuit in the device; a structure of a reader portion located close to the semiconductor device; and the like.

For example, the following technique has been taken in an automatic identification technique as a technique examined by the inventor of the present invention.

Containers, such as bottles etc. made of glass, plastic, or other materials, are used in various fields for housing and storing various medicines and samples. There is the possibility that contents in the containers will cause mixtures, chemical reactions or the like of various foreign matters during the manufacture or storage thereof. Therefore, it is necessary to check the contents at regular intervals during the manufacture or storage. Since the check results are automatically registered in a computer, the automatic identification technique has been required.

Conventionally, a bar code or the like has been attached to the containers for this automatic identification. Also, as a substitute means for the bar cord, there has been used an IC chip for radio frequency identification (RFID), by which information such as identification (ID) numbers or the like, stored in an IC chip, can be read wirelessly from the outside, and therefore the RFID IC chips are attached to such containers as bottles etc.

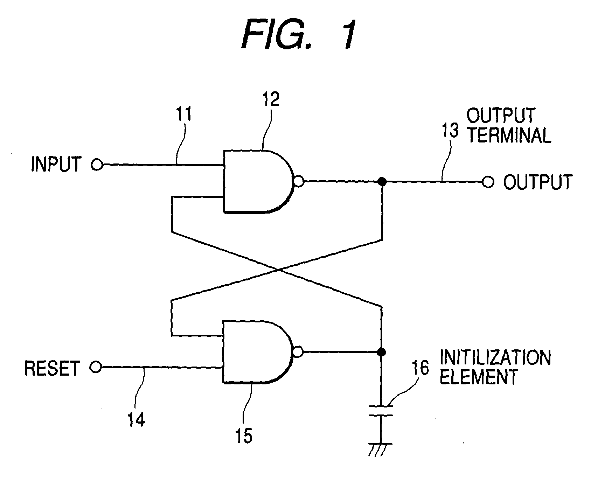

Note that the technique described in the gazette of Japanese Patent Laid-Open No. 2002-184872 is recited as an example of the technique relative to the above-mentioned RFID IC chip, and a power on reset circuit exists in FIG. 1 of the gazette, which shows the circuit configuration of the RFID IC chip.

### SUMMARY OF THE INVENTION

By the way, as a result of the examination of the technique relative to the RFID IC chip as mentioned above by the inventor, the followings have become apparent.

That is, the sizes of the conventional bar code and RFID IC chip are not so small. Accordingly, when the size of the container is small, the adhesion space of these identification labels becomes insufficient in area, whereby these labels, adhering to the outside surface of the container, have hindered observations of the contents.

Also, containers such as bottles etc. frequently have a rotating movement etc., so that, in the case of adhesion of the bar code or RFID IC chip to the outside surface of each container, the position thereof has been shifted at the time of reading the identification information, which causes the reading error. For such reason, there is required a technique for positioning: identification labels, such as a bar code and an RFID IC chip, etc., which adhere to the container; and information readers for reading the identification information of the bar code and the RFID IC chip, etc. Thus, it has been required to sacrifice the economical efficiency and the identification speed for an addition of an alignment device etc.

Meanwhile, since there are a great number of containers such as bottles etc. and a wide variety of types of the containers, the RFID IC chips are designed for disposable use. Therefore, it is necessary to form the RFID IC chips economically. For its achievement, the downsizing of the IC chip and the improvement of its yield are required.

However, the power on reset circuit has been in the conventional RFID IC chip as shown in FIG. 1 of the gazette of the Japanese Patent Laid-Open No. 2002-184872. The layout area of this power on reset circuit sometimes reaches the one third of the chip area, whereby the downsizing of the IC chip has been hindered.

Accordingly, an object of the present invention is to achieve the downsizing of a semiconductor device, by removing the necessity of a power on reset circuit in a RFID semiconductor device (for example, RFID IC chip).

Also, another object of the present invention is to position easily an information reader for the RFID semiconductor device and to permit the simple and high-speed reading of the data reader.

The above and other objects and novel characteristics of the present invention will be apparent from the description of this specification and the accompanying drawings.

The typical ones of the inventions disclosed in this application will be briefly described as follows.
(1) More specifically, the RFID semiconductor device (RFID IC chip etc.) according to the present invention is characterized in that a flip-flop circuit, incorporated in the semiconductor device, includes an element functioning to logically fix the output of the flip-flop circuit to either H or L when a power supply voltage is increased.
   As described above, by adding said element thereto, the output of the flip-flop when the power supply voltage is increased is fixed to a predetermined value. Therefore, it is possible to eliminate the power on reset circuit and consequently achieve the downsizing of the semiconductor device.
(2) Further, the RFID semiconductor device according to the present invention is characterized in that it is attached to the container so that the distance from the centerline of the container to the center of the semiconductor device is 3 mm or less.
   Accordingly, since the alignment can be facilitated by attaching the RFID semiconductor device on or near the centerline of the container, it becomes possible to easily identify the content in the container even if the container is rotated or the like.
(3) Additionally, the RFID semiconductor device according to the present invention further comprises an antenna in the semiconductor device.
   Thereby, since the antenna is incorporated, an external attachment of the antenna becomes unnecessary, thereby allowing for achieving the cost reduction and the overall downsizing.
(4) Moreover, the RFID semiconductor device according to the present invention is further characterized in that a check of the semiconductor device is performed when the semiconductor device is attached to the container or when the information stored in the semiconductor device is read.
   Therefore, a handling portion or reader portion has an opportunity to come close to or into contact with the semiconductor device when the RFID semiconductor device is attached to the container or when the information is read by the reader. At this time, a quality check of the chip and a removal of the defective product can be automatically carried out.
(5) Further, the reader for the RFID semiconductor device according to the present invention comprises: a conveyor unit; a plurality of holders for fixing the container to which the semiconductor device is attached; and a plurality of reader portions each located close to the semiconductor device and having an antenna for reading the information stored in the semiconductor device.
   By adopting the structure as described above, the RFID semiconductor device and the reader portion are faced with each other on a conveyor unit such as a belt conveyer etc. for a predetermined time. Therefore, it is possible to ensure sufficient time to read the information and to carry out the high-speed identification of a large number of containers.
(6) Also, the RFID semiconductor device according to the present invention is attached to the lid or the bottom of the container so that the center of the semiconductor device is made to coincide with the container of the centerline.
   Accordingly, since the center of the semiconductor device is made to coincide with the centerline of the container, the alignment thereof is further facilitated.
(7) Further, the reader for the RFID semiconductor device according to the present invention comprises: the holder for fixing the container to which the semiconductor device according to item (1) is attached; and an antenna located coincident with the centerline of the container and brought into contact with the semiconductor device to read the information stored in the semiconductor device.

Therefore, the structure as described above makes it possible to ensure sufficiently the communication distance between the semiconductor device and the antenna.

### BRIEF DESCRIPTION OF THE DRAWINGS

FIG. 1 is a circuit diagram showing a configuration of a flip-flop circuit incorporated in a RFID semiconductor device according to a first embodiment of the present invention.
FIG. 2 is a diagram showing the state where the RFID semiconductor device, according to a second embodiment of the present invention, is attached to the bottom of a container.
FIG. 3 is a diagram showing the state where the RFID semiconductor device, according to the second embodiment of the present invention, is attached to the lid of the container.
FIG. 4 is a diagram showing the structure of a reader according to a third embodiment of the present invention.

### DESCRIPTION OF THE PREFERRED EMBODIMENTS

Hereinafter, embodiments of the present invention will be described in detail with reference to the accompanying drawings.

### (First Embodiment)

FIG. 1 is a circuit diagram showing the configuration of a flip-flop circuit incorporated in a RFID semiconductor device according to a first embodiment of the present invention.

First, an example of the circuit configuration of the flip-flop circuit incorporated in the RFID semiconductor device according to the first embodiment will be described with reference to FIG. 1.

There is a counter inside the RFID IC chip serving as the RFID semiconductor device, and a plurality of flip-flop circuits are used as basic circuits of the counter.

The flip-flop circuit according to the first embodiment, for example, includes: a first gate circuit 12 such as a two-input NAND gate etc.; a second gate circuit 15 such as a two-input NAND gate etc.; and an initialization element 16 such as a capacitor etc. In FIG. 1, NAND gates used as the first gate circuit 12 and the second gate circuit 15 are shown, but NOR gates may be used as them. Also, the initialization element 16 may be a resistor, an inductance, a transistor, the combination thereof, or the like instead of the capacitor.

An input terminal 11 of the flip-flop circuit shown in FIG. 1 is one of inputs of the first gate circuit 12, and an output of the first gate circuit 12 is connected to an output terminal 13 of the flip-flop circuit. The output terminal 13 of the flip-flop circuit serves as an output and also serves as one of inputs of the second gate circuit 15. The initialization element 16 is connected to an output of the second gate circuit 15. Also, the output of the second gate circuit 15 is connected to the other input of the first gate circuit 12. Furthermore, a reset terminal 14 of the flip-flop circuit is provided to the other input of the second gate circuit 15.

Next, an operation of the first embodiment will be described based on a function of the flip-flop circuit.

First, when a power supply voltage is gradually increased from zero, a level of each terminal in the flip-flop circuit is indefinite during its initial period. Therefore, even when the power supply voltage is sufficiently increased in the absence of the initialization element 16, the level of the output terminal 13 remains indefinite as long as the input terminal 11 or reset terminal 14 does not become logically equivalent to L.

Meanwhile, it takes time to charge the initialization element 16 in the presence of the initialization element 16 (for example, capacitor). Accordingly, when the power supply voltage is sufficiently increased, the input of the first gate circuit 12 becomes logically equivalent to L if the voltage of the initialization element 16 is equal to or lower than a threshold voltage of the first gate circuit 12 (for example, two-input NAND), and further the output terminal 13 is initialized to H level.

In the semiconductor device such as an RFID IC chip according to the first embodiment, a battery-less operation can be made by supplying energy to the inside thereof using electromagnetic waves. The inner circuit configuration, disclosed in the gazette of Japanese Patent Laid-Open No. 2002-184872, can be taken as an example of the inner circuit configuration of the conventional RFID IC chip. A counter constituted by flip-flop circuits exists in the inner circuit of this RFID IC chip.

In such circuit, when the power supply voltage is increased, the output of the flip-flop circuit becomes indefinite and the function thereof becomes unstable. Therefore, there is required the power on reset circuit used for the initialization when the power supply voltage is increased.

By using the flip-flop circuit according to the first embodiment, the initialization can be done automatically and therefore the power on reset circuit becomes unnecessary.

More specifically, in the RFID IC chip including one or more flip-flop circuits, the flip-flop circuit has therein the initialization element 16, which functions to determine that a certain output terminal of the flip-flop circuit is logically fixed to H or L when the power supply voltage is increased, whereby the power on reset circuit becomes unnecessary.

In the field of RFID, particularly, in the field of automatic identification as used by the conventional bar cord, a wide range of applications is expected because of: a price-reduction of the reader; a high-security not altered easily of the reader; a large amount of data stored; readability of the information even in the shielding; and the like. However, there has been a problem of the cost reduction in the chip due to the large chip size.

The manufacturing cost of one silicon wafer is generally determined by the umber of masks used if the process thereof is identical. Therefore, the smaller the chip size is, the lower the manufacturing cost can be.

For example, if the chip size is changed from a 0.3 mm square to a 0.15 mm square, the number of chips to be obtained is quadrupled. Therefore, the cost per chip is reduced to a quarter thereof.

As described in the first embodiment according to the present invention, if the state of the flip-flop circuit is automatically determined when the voltage is increased, the power on reset circuit occupying the one third of the chip area becomes unnecessary, thereby allowing for effectively reducing the chip area.

### (Second Embodiment)

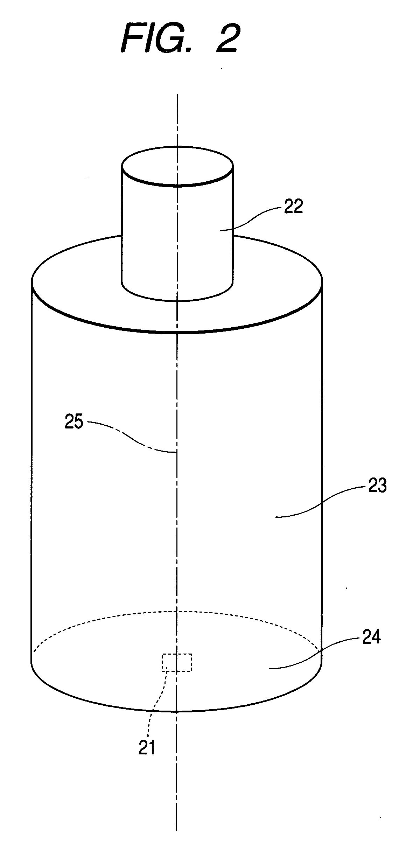

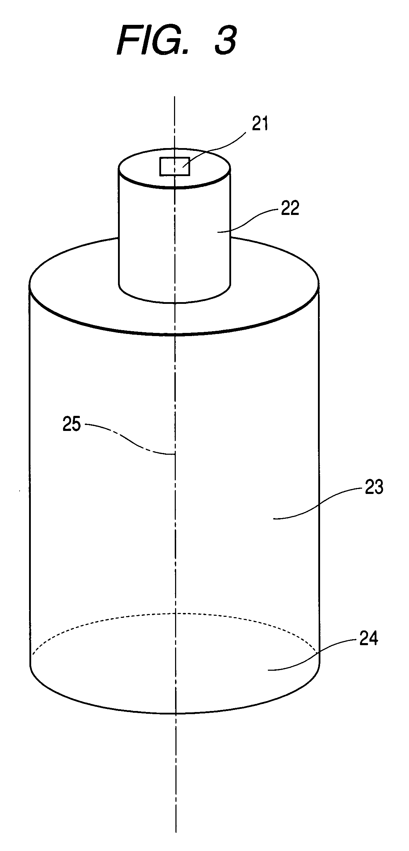

FIG. 2 is a diagram showing the state where the RFID IC chip as an RFID semiconductor device, according to a second embodiment of the present invention, is attached to the bottom of a container thereof. FIG. 3 is a diagram showing the state where the RFID semiconductor device, according to the second embodiment of the present invention, is attached to the lid of the container thereof.

As an example of the structure in the second embodiment, in a container 23 such as a bottle etc., an RFID IC chip 21 is attached in the vicinity of a container centerline 25 on the bottom 24 of the container as shown in FIG. 2.

FIG. 3 shows an example of the structure where the RFID IC chip 21 is attached in the vicinity of the container centerline 25 on the upper surface of a container lid 22.

Also, though not shown in FIG. 2, a reader portion including an antenna etc. is located so as to contact the RFID IC chip 21 in reading the data stored in the RFID IC chip 21.

In addition, since the data reading is performed in a non-contact manner, it is necessary to connect the antenna to the RFID IC chip 21. However, the antenna may be provided inside the RFID IC chip 21.

Conventionally, the bar code and the like have been used to identify the contents of the container 23 such as a bottle etc. However, in checking the inside of the container 23, there is sometimes the case where the bar code becomes a hindrance and thereby is of no use. In that respect, such disadvantage can be eliminated if the minute RFID IC chip 21 is attached to the bottom or the lid of the container 23.

In the case of the minute IC chip in the RFID, for example, a small IC chip with a 0. 3 mm square or an IC chip in which a minute antenna is incorporated, it is sometimes difficult to ensure a sufficient communication distance. This is because, since the RFID IC chip receives power supply from the outside by the electromagnetic waves in many cases, the reduction in energy acquisition area inevitably causes that in the communication distance. Therefore, it becomes necessary to align the data reader portion with the IC chip so that the distance therebetween can be set at 1 mm or less. If it is guaranteed that the container such as a bottle etc. has a circular form when viewed from the top or bottom thereof, then a technique of the alignment of the centers of circles is required. Therefore, it is possible to perform the alignment in a simple manner.

At this time, better effects can be obtained if the distance between the centerline of the container and the center of the IC chip is within a range of 3 mm.

### (Third Embodiment)

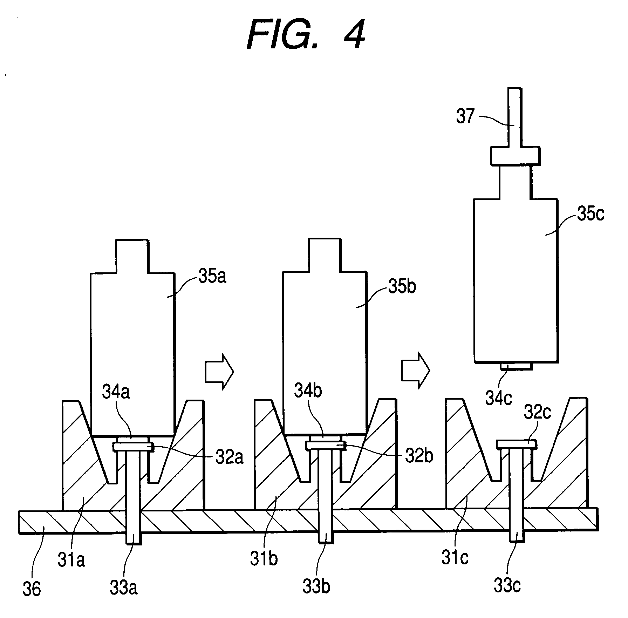

FIG. 4 is a diagram showing the structure of a reader according to a third embodiment of the present invention.

First, an example of the structure according to the third embodiment will be described with reference to FIG. 4.

The reader according to the third embodiment, for example, is constituted from: container positioning mechanisms 31a, 31b and 31c; reading heads 32a, 32b and 32c; coaxial lines 33a, 33b and 33c; RFID IC chips 34a, 34b and 34c; containers 35a, 35b and 35c; a conveyor unit 36 such as a belt conveyer etc.; a suction-attachment device 37; and the like. The container positioning mechanisms 31a to 31c are provided on the conveyor unit 36, and the coaxial lines 33a to 33c with reading heads 32a to 32c are attached into the container positioning mechanisms 31a to 31c, respectively. Also, an antenna is arranged in each of the reading heads 32a to 32c.

Next, a method of reading information will be described.

The first container positioning mechanism 31a is provided on the conveyor unit 36, and the first coaxial line 33a with the first reading head 32a is attached to the first container positioning mechanism 31a. The first container 35a, to which the first RFID IC chip 34a is attached, is placed on and aligned with the first container positioning mechanism 31a, and then both of them are fixed. Subsequently, the information, stored in the first RFID IC chip 34a, is read by the first reading head 32a in a non-contact manner.

Similarly, the second container positioning mechanism 31b is provided on the conveyor unit 36, and the second coaxial line 33b with the second reading head 32b is attached to the second container positioning mechanism 31b. The second container 35b, to which the second RFID IC chip 34b is attached, is placed on and aligned with the second container positioning mechanism 31b, and then both of them are fixed. Subsequently, the information, stored in the second RFID IC chip 34b, is read by the second reading head 32b in a non-contact manner.

Similarly, the third container positioning mechanism 31c is provided on the conveyor unit 36, and the third coaxial line 33c with the third reading head 32c is attached to the third container positioning mechanism 31c. The third container 35c, to which the third RFID IC chip 34c is attached, is separated from the third container positioning mechanism 31c by the suction-attachment device 37 after the finish of the information reading.

More specifically, the information (for example, 128 bit ID number etc.), stored in the RFID IC chips 34a to 34c, is read in the following manner. That is, the containers 35a to 35c are placed on the container positioning mechanisms 31a to 31c, respectively. Thereby, the alignment thereof is automatically performed, whereby the RFID IC chips 34a to 34c, attached close to the centerlines of the containers 35a to 35c, come close to the reading heads 32a to 32c, respectively. Thereafter, the plurality of containers 35a to 35c are respectively made into contact with the plurality of reading heads 32a to 32c in a one-to-one manner, and thereby the information, stored in the RFID IC chips 34a to 34c, is read through the reading heads 32a to 32c. The information to be read is ID numbers or the like of objects, and the read information is recorded in a data processing system via a wireless LAN system etc.

In FIG. 4, there are shown, as an example, three sets of container positioning mechanisms 31a to 31c, reading heads 32a to 32c, coaxial lines 33a to 33c, RFID IC chips 34a to 34c, and containers 35a to 35c. However, the example shown in FIG. 4 is not limited to the above structure and there is no limitation on the number of components as long as a plurality of components are provided.

Also, movement from the outside is added to liquid medicine, which is poured in the container such as a bottle etc., by agitation or the like, and thereby the mixing of foreign matters therein is checked in various places. Since these containers are rapidly moved, for example, at a movement speed of 10 to 50 bottles per second, it is necessary to ensure the alignment and the reading time in order to rapidly read the information by the RFID.

Further, since the chip for the RFID adheres to the lid or bottom of the above-mentioned container, it is necessary to align the minute IC chip with the reading head. The container has a cylindrical shape in general, and the alignment thereof can be facilitated if the configuration of a member holding the container also has a cylindrical or conical shape for the purpose of aligning the centers of cylindrical members with each other.

The container positioning mechanisms 31a to 31c used for the alignment are arranged on the conveyor unit 36, the containers 35a to 35c are sequentially located and aligned with the container positioning mechanisms 31a to 31c, and the information is read therefrom. If the reading heads 32a to 32c are moved in synchronization with the container positioning mechanisms 31a to 31c for a predetermined time, the alignment and the reading time can be ensured. If the synchronizing time thereof can be ensured, the movement speed of the conveyor unit 36 can be increased, thereby allowing for performing the high-speed automatic identification of a great number of containers.

Also, in the above-described embodiments, a handling device (not shown) or the reading heads 32a to 32c have an opportunity to come close to or into contact with the RFID IC chip 21 when the RFID IC chip 21 is attached thereto or when the information stored in the RFID IC chip 21 is read by the reader. Therefore, at this time, a quality check of the chip and a removal of the defective product can be automatically performed.

In the foregoing, the invention made by the inventor has been concretely described based on the embodiments. However, needless to say, the present invention is not limited to the foregoing embodiments and can be variously modified and changed without departing from the gist thereof.

For example, in the above-described embodiments, there has been described the case where a cylindrical container such as a bottle etc. is used as an example of the shape of the container. However, the shape thereof is not limited to this case, and may be applied as a shape such as a columnar, conical, polygonal columnar, polygonal cone, cup shape, or the like.

The advantages achieved by the typical ones of the inventions disclosed in this application will be briefly described as follows.
(1) There is adopted the configuration such that, when the power supply voltage of the RFID semiconductor device is increased, the output of the flip-flop circuit in the semiconductor device is set to a predetermined level. Therefore, it is possible to remove the power on reset circuit, which conventionally occupies one third of the chip area, and thereby downsizing the RFID semiconductor device.
(2) Since the RFID semiconductor device is provided on the container centerline or close thereto, the alignment can be facilitated. The identification of the content of the container can be simply performed even if the container is rotated.
(3) There is adopted the configuration such that the RFID semiconductor devices and the reading heads are made into contact in a one-to-one manner for a predetermined time on the conveyor unit. Therefore, it is possible to obtain sufficient time to identify the content, and rapidly identify the contents in many containers.
(4) The handling device or reader portions have an opportunity to come close to or into contact with the RFID semiconductor device when the RFID semiconductor device is attached to the container or when the information is read by the reader. Therefore, at this time, the quality check of the chip and the removal of the defective product can be automatically performed.

## Claims

1. A semiconductor device for radio frequency identification, which includes one or more flip-flop circuits, **characterized in that:**
said flip-flop circuit includes an element for logically fixing an output of said flip-flop circuit to either L or H when a power supply voltage is increased.

2. A semiconductor device for radio frequency identification, which is attached to a container to identify contents of said container, **characterized in that**:
said container is located so that the distance from the centerline of said container to the center of said semiconductor device is 3 mm or less.

3. The semiconductor device according to claim 2, further comprising an antenna in said semiconductor device.

4. The semiconductor device according to claim 2,
wherein a check of said semiconductor device is performed when said semiconductor device is attached to said container or when information, stored in said semiconductor device, is read.

5. A reader for the semiconductor device, **characterized by**:
a conveyor unit;
a plurality of holders provided on said conveyor unit and fixing the container to which the semiconductor device according to claim 1 is adhered; and
a plurality of reader portions each located close to said semiconductor device and including an antenna for reading information stored in said semiconductor device.
